# EUROPEAN PATENT SPECIFICATION

(11) **EP 1 727 424 B1**
(45) Date of publication and mention of the grant of the patent: **01.06.2016**
(21) Application number: 05707694.5
(22) Date of filing: 03.03.2005
(51) Int. Cl.: A01N 41/10, A01N 37/22, A01N 25/04

(54) **SUSPOEMULSIONS COMPRISING AN HPPD-INHIBITING AND A CHLORACETAMIDE HERBICIDE**
SUSPOEMULSIONEN, DIE EIN HPPD-HEMMENDES HERBIZID UND EIN CHLORACETAMID-HERBIZID ENTHALTEN
SUSPOEMULSIONS COMPRENANT UN HERBICIDE INHIBANT HPPD ET UN CHLORACETAMIDE

(30) Priority: 15.03.2004 GB 0405760
(43) Date of publication of application: 06.12.2006
(73) Proprietor: Syngenta Participations AG, 4058 Basel (CH)
(72) Inventor: HAESSLIN, Hans Walter, DECEASED (DE); HOPKINS, Derek John Syngenta Limited, Bracknell, Berkshire RG42 6EY (GB); GUYON, Frederique Syngenta Crop Protection AG, CH-4058 Basel (FR)
(74) Representative: Syngenta International AG
(86) International application number: PCT/EP2005/002229
(87) International publication number: WO 2005/089548

(56) References cited:
- EP-A- 0 261 492
- EP-A- 0 514 769
- WO-A-00/07444
- WO-A-01/43550
- WO-A-97/34486
- WO-A-99/40784
- US-B1- 6 534 444

## Description

The present invention relates to a novel agrochemical formulation comprising at least two active ingredients and the use thereof.

Agricultural pesticide manufacturers have identified the need for broad-spectrum pesticidal products. Single active ingredient formulations rarely meet such broad-spectrum requirements, and thus combination products, perhaps containing up to four complementary biologically active ingredients, have been developed. Such products have several additional advantages e.g. elimination of tank mixing; reduction in inventory products; saving in time and money; and a reduction in the number of times the crop is sprayed.

Combinations of the cyclohexandione herbicide mesotrione with chloroacetamide herbicides, like acetochlor, metolachlor and alachlor, are for instance known from WO01/435550.

The development of such products is relatively simple providing that the active ingredients to be combined are physically, chemically and biologically compatible. In these situations the active ingredients can be combined in a broad range of formulation types well known in the art. Where the active ingredients are not physically, chemically and/or biologically compatible, it has been necessary to develop novel compositions to overcome the problems associated with such incompatibilities. One example of a formulation type is the so-called 'suspoemulsion' formulation. These suspoemulsion formulations are formed by combining an emulsion phase, containing one or more active ingredients, with a continuous phase also containing one or more active ingredients in the form of a solid dispersion. This type of formulation has several user advantages related to ease of transportation, storage and field application.

Suspoemulsions comprising two or more pesticides, e.g. fungicides or herbicides are for instance disclosed in WO00/07444, EP261492, WO99/40784, and EP514769. WO99/40784 discloses suspoemulsions comprising at least two pesticides which are substantially insoluble in water, wherein one pesticide, e.g. atrazine, is solid and the other pesticide, e.g. S-metolachlor, is liquid or is dissolved in a hydrophobic organic solvent, and a combination of surfactants comprising a tristyrylphenol-ethoxylate having 6-14 mol ethoxylate, in nonionic form, and a tristyrylphenol-ethoxylate having 14-18 mol ethoxylate in form of its sulphate or phosphate, in anionic or acid form, and a dialkyl-sulfosuccinate salt.

However, the formation of such suspoemulsion formulations is rarely straightforward. The technical challenge and complexity to formulate suspoemulsion formulations with satisfactory physical and chemical stability has been previously reported (e.g. Suspoemulsion Technology and Trends, Joseph R. Winkle, Pesticide Formulation and Adjuvant Technology, CRC Press, 1996).

Particular problems were encountered when attempting to formulate the active ingredients of the present invention into a suspoemulsion. One of the active ingredients used is the HPPD-inhibiting triketone herbicide mesotrione (2-(2'-nitro-4'-methylsulphonylbenzoyl)-1,3-cyclohexanedione), which may be present either as the free acid, or as a metal salt. Mesotrione free acid is chemically unstable in aqueous medium under a range of pH conditions and/or concentration. The problem of the chemical instability may be overcome by chelating the mesotrione free acid with a metal chelating agent, for example a copper or zinc salt. However, the introduction of the metal salt into the composition surprisingly led to severe complications with the physical stability of the resulting suspoemulsion. In some cases it was noted that the chelated mesotrione particles were migrating into the emulsion phase-leading to heteroflocculation/coagulation. In other cases direct heteroflocculation occurred. Depending on the surfactant system, this heteroflocculation/coagulation could happen instantaneously on a macroscopic scale or very slowly, only under stress at a microscopic scale. This was considered very abnormal behaviour as it appeared that the event was not just a flocculation (surface to surface) event, but rather an actual migration of the mesotrione to the inside of the emulsion droplet.

It is therefore an object of the present invention to provide a chemically and physically stable suspoemulsion formulation that comprises mesotrione as one of the active ingredients.

The other active ingredient used is a chloroacetamide herbicide selected from the group consisting of metolachlor, acetochlor and alachlor.

WO2004/080178 discloses a suspoemulsion formulation comprising a 2-(substituted benzoyl)-1,3-cyclohexanedione herbicide and a chloroacetamide; however, the formulations disclosed require the presence of a polymeric stabilizer. The present invention makes the use of a polymeric stabilizer unnecessary.

Accordingly, a first aspect of the invention provides a chemically and physically stable suspoemulsion formulation, free from polymeric stabilisers having a molecular weight of between 10,000 and 1,000,000 daltons, comprising:
(i) a continuous phase,
(ii) 2-(2'-nitro-4'-methylsulphonyl benzoyl)-1,3-cyclohexanedione or a metal chelate thereof insoluble in the continuous phase,
(iii) a chloroacetamide selected from the group consisting of metolachlor, acetochlor and alachlor, and
(iv) one or more aromatic ethoxylate compounds or derivatives thereof with the exclusion of formulations comprising all of a tristyrylphenol-ethoxylate having 6-14 mol ethoxylate, in non-ionic form, and a tristyrylphenol-ethoxylate having 14-18 mol ethoxylate in form of its sulphate or phosphate, in anionic or acid form, and a dialkyl-sulfosuccinate salt.

The continuous phase may be any suitable solvent, for example water, glycol or alcohol, but is preferably water.

The mesotrione may be present in either the acid (non-chelated form) or as the metal chelated form. The metal chelated form may be made by adding a metal stabilizing salt to the suspoemulsion formulation. Examples of suitable stabilizing metal salts that may be used include calcium, beryllium, barium, titanium, magnesium, manganese, zinc, iron, cobalt, nickel and copper salts; most suitable are magnesium, manganese, zinc, iron, cobalt, nickel and copper salts; especially preferred is a copper salt, for example copper hydroxide. Suitably, the concentration of stabilizing metal salts in the suspoemulsion formulation of the invention is from 0.01 to 4.0%, and preferably from 0.02 to 1.5%.

The chloroacetamide is selected from the group consisting of metolachlor, acetochlor and alachlor, preferably metolachlor, and most preferably, s-metolachlor.

The one or more aromatic ethoxylate compounds are selected from di- or tri-styrylphenol ethoxylates and their derivates, such as phosphates and sulphates and salts thereof. Examples of the one or more di- or tri-styrylphenol ethoxylates or derivatives thereof include, but are not limited to, ethoxylated tristyrylphenol, sulphates and phosphates of polyarylphenol ethoxylates. These sulphates and phosphates being used either in their acid forms, or as salts, such as ammonium, triethanolamine, etc. Examples of such products include: Soprophor BSU', 'Soprophor S25', Soprophor TS/10, Soprophor 4D384, Soprophor 3D33, Soprophor FL, etc.

The concentration of mesotrione in the formulation is suitably from 10 g a.i./litre to 200 g a.i./litre, preferably from 25 g a.i./litre to 100 g a.i./litre. The concentration of chloroacetamide in the formulation is suitably from 100 g a.i./litre to 800 g a.i./litre, preferably from 250 g a.i./litre to 600 g a.i./litre. The concentration of ethoxylate in the suspoemulsion formulation is suitably from 5 g a.i./litre to 150 g a.i./litre, preferably from 10 g a.i./litre to 75 g a.i./litre. Suitably, the formulation comprises at least 300g/litre of total a.i.

Whilst any pH may be appropriate for the formulations of the invention, a pH in the acidic range is considered preferable, and most preferably the formulation has a pH of 5 or less.

The suspoemulsion formulation of the present invention may also optionally comprise one or more additional active ingredients. The one or more additional active ingredients may be a pesticide, for example a herbicide, fungicide, insecticide or the like; or the additional active ingredient may be a compound selected from the class of compounds known as safeners or antidotes. The concentration of additional active ingredient in the formulation is suitably in the range of from 1 g/l to 500 g/l, and preferably from 2 g/l to 300g/l

In a further embodiment of the invention, the suspoemulsion formulation further comprises an additional active ingredient which is a herbicide, for example a herbicide selected from the class known as triazines, for example atrazine or terbuthylazine; a phosphonate herbicide, for example glyphosate or salts thereof; or a phosphinate herbicide, such as glufosinate or salts thereof. The concentration of additional herbicide is suitably in the range of from 5 g/l to 500 g/l, and preferably from 10 g/l to 300 g/l. Most preferably, the additional herbicide is a triazine, preferably atrazine or terbuthylazine.

In a still further embodiment of the invention, the suspoemulsion formulation comprises an additional active ingredient selected from the class of compounds known as safeners or antidotes, for example benoxacor, or dichlormid. The concentration of safener is suitably in the range of from 1 g/l to 100 g/l, and preferably from 2 g/l to 40 g/l.

In a yet further embodiment of the invention, the suspoemulsion formulation further comprises at least two additional active ingredients, wherein at least one of the additional active ingredients is a herbicide, for example a triazine, such as atrazine or terbuthylazine, and at least one of the other additional active ingredients is a safener, for example benoxacor or dichlormid.

The suspoemulsion formulation of the present invention may also optionally comprise an electrolyte component. By the term 'electrolyte component', we mean a compound which produces ions when in solution, for example a salt of an alkali metal, such as sodium, or alkaline earth metal, such as magnesium. In one preferred embodiment, the salt is a chloride salt, for example magnesium chloride. In a second preferred embodiment, the salt is a nitrate salt, for example ammonium nitrate. Suitably, the concentration of electrolyte in the suspoemulsion formulation of the invention is from 0.1 to 200g/l, and suitably from 1 to 50g/l, and preferably less than 10g/l..

Other formulation components as appropriate may be included in the suspoemulsion. Such other components may include none, some or all of the following: crystallization inhibitors, viscosity modifiers, spray droplet modifiers, pigments, antioxidants, foaming agents, light-blocking agents, antifoam agents, sequestering agents, neutralizing agents, buffers, corrosion inhibitors, dyes, odorants, thickening agents and freezing point depressants, for obtaining special effects.

In a further aspect of the invention, there is provided a method for controlling the growth of undesirable vegetation such as weeds, which may be present around the locus of a desired plant species (which may or may not exhibit resistance, either by natural means or by genetic modification, to one or more herbicides), e.g. a crop such as corn, which comprises applying the formulation of the invention to the locus of such undesirable vegetation. Examples of undesirable vegetation include, but are not limited to, velvetleaf, redroot pigweed, common water hemp, Palmer amaranth, ivyleaf morning glory, prickly sida, giant ragweed, common ragweed, common cocklebur, Eastern black nightshade, common lambsquarters, Pennsylvania smartweed, common sunflower, jimsonweed, hemp sesbania, toothed spurge, common purslane, large crabgrass, yellow foxtail and kochia. The weeds may or may hot demonstrate resistance (either naturally or genetically modification) to one or more herbicides. The suspoemulsion formulation may be applied pre-emergence or post-emergence of the crop. Preferably, the formulation is applied pre-emergent. The formulation may be applied by air or on the ground by known techniques, such as hydraulic nozzle spray.

One advantage of the suspoemulsion formulation of the present invention is that, under the majority of conditions, season-long control of weeds is obtained by just one application of the formulation.

The invention will now be described by way of example only.

**Description of Products used in the Examples**

| **Component** | **Description** |
|---|---|
| Soprophor BSU (Rhodia) | Tristyrylphenol with 16 moles EO |
| Soprophor S/25 (Rhodia) | Tristyrylphenol polyglycolether EO 25 |
| Soprophor 4 D 384 (Rhodia) | Ethoxylated tristyrylphenol sulphate, ammonium salt |
| Berol 922 (Akzo Nobel) | Nonylphenol copolymer 20 PO/25-30 EO |
| Soprophor FL (Rhodia) | Tristyrylphenol-polyglycolether-phosphate triethanolamine salt |
| Atlox G 5000 (Uniqema) | Copolymer butanol PO/EO |
| NANSA EVM63/B (Huntsman) | Dodecyl-benzene sulfonic acid Ca-salt linear solvent sol. |
| Isopar L (Exxon Chemical) | Isoparaffinic solvent |
| Proxel GXL (Avecia) | 1,2-benzisothiazolin-3-one in sol. approx. 20% |
| Attagel 50 (Engelhard Corp.) | Attapulgite clay (magnesium aluminium silicate) |
| Kelzan (Kelko) | Heteropolysaccharide |
| Antifoam MSA (Dow Coming) | Polydimethylsiloxane |
| Silicon oil DB 100 compound (DOW Coming) | |

| | |
|---|---|
| EO = ethylene oxide; PO = propylene oxide. | |

### Example 1

### 1.1 Preparation of Premixes

### 1.1.1 Preparation of S-metolachlor oil phase

| | %wt |
|---|---|
| S-metolachlor | 75.0 |
| Isopar L | 15.0 |
| NANSA EVM63/B | 5.0 |
| ATLOX G 5000 | 5.0 |

First charge s-Metolachlor; add NANSA EVM63/B, Atlox G5000 (preheated to 50-60°C) and Isopar L. Mix until dissolved.

### 1.1.2 Preparation of Mesotrione Millbase

| | %wt |
|---|---|
| Mesotrione | 35.00 |
| Soprophor S/25 | 3.50 |
| Acetic Acid (80%) | 7.73 |
| Copper hydroxide (100%) | 5.05 |
| Antifoam MSA | 0.10 |
| Kelzan | 0.10 |
| Ammonium nitrate (60%) | 4.30 |
| Water | rest |

Mix together the water, acetic acid and copper hydroxide. Add the mesotrione. The ammonium nitrate solution, the Soprophor S/25 (surfactant), Antifoam MSA and the Kelzan are added and mixed until uniform. The slurry was ground to a median particle size of less than 2.5 microns.

### 1.2 Preparation of Final Formulation

| | %wt |
|---|---|
| Mesotrione Millbase | 15.95 |
| S-Metolachlor oil phase | 62.0 |
| Kelzan | 0.02 |
| Propylene glycol | 4.65 |
| Proxel GXL | 0.19 |
| Silicon oil DB 100 compound | 0.09 |
| Attagel 50 | 1.40 |
| Water | rest |

First charge water, add propylene glycol and Mesotrione millbase and mix until uniform. Add the Proxel GXL (preservative), Silicon oil DB 100 compound (antifoam agent) and thickener gels (Kelzan gel and Attagel 50 in form of aqueous gel containing the clay and tetra sodium pyrophosphate) under agitation. Slowly add the oil phase in such a way as to form an emulsified organic phase.

### Example 2

### 2.1 Preparation of Premixes

### 2.1.1 Preparation of S-metolachlor Oil Phase (see 1.1.1)

### 2.1.2 Preparation of Mesotrione Millbase

| | %wt |
|---|---|
| Mesotrione | 35.00 |
| Berol 922 | 5.70 |
| Acetic Acid (80%) | 7.73 |
| Copper Hydroxide (100%) | 5.05 |
| Antifoam MSA | 0.10 |
| Kelzan | 0.10 |
| Ammonium nitrate (60%) | 4.30 |
| Water | rest |

Mix together the water, acetic acid and copper hydroxide. Add the mesotrione. The ammonium nitrate, the Berol 922 (non-ionic surfactant), the Antifoam MSA and the Kelzan are added and mixed until uniform. The slurry was ground to a median particle size of less than 2.5 microns.

### 2.2 Preparation of Final formulation

| | %wt |
|---|---|
| Mesotrione millbase | 15.95 |
| S-metolachlor oil phase | 62.0 |
| Kelzan | 0.02 |
| Propylene glycol | 4.65 |
| Proxel GXL | 0.19 |
| Silicon oil DB 100 compound | 0.09 |
| Attagel 50 | 1.40 |
| Water | rest |

First charge water, add propylene glycol and mesotrione millbase and mix until uniform. Add the Proxel GXL (preservative), Silicon oil DB 100 compound (antifoam agent) and thickener gels (Kelzan gel and Attagel 50 in form of aqueous gel containing the clay and tetra sodium pyrophosphate) under agitation. Slowly add the oil phase in such a way as to form an emulsified organic phase.

### Example 3

### 3.1 Preparation of Premixes

### 3.1.1 Preparation of S-metolachlor Oil Phase (see 1.1.1)

### 3.1.2 Preparation of Mesotrione Millbase

| | %wt |
|---|---|
| Mesotrione | 25.00 |
| Soprophor BSU | 5.70 |
| Acetic acid (80%) | 7.70 |
| Copper hydroxide (100%) | 3.6 |
| Antifoam MSA | 0.10 |
| Kelzan | 0.10 |
| Water | rest |

Mix together the water, acetic acid and copper hydroxide. Add the mesotrione, the Soprophor BSU (surfactant), Antifoam MSA and Kelzan and mix until uniform. The slurry was ground to a median particle size of less than 2.5 microns.

### 3.2 Preparation of Final Formulation

| | %wt |
|---|---|
| Mesotrione Millbase | 22.3 |
| S-metolachlor oil phase | 62.0 |
| Kelzan | 0.02 |
| Propylene glycol | 4.65 |
| Proxel GXL | 0.19 |
| Silicon oil DB 100 compound | 0.09 |
| Attagel 50 | 1.40 |
| Water | rest |

First charge water, add propylene glycol and mesotrione millbase and mix until uniform. Add the Proxel GXL (preservative), Silicon oil DB 100 compound (antifoam agent) and thickener gels (Kelzan gel and Attagel 50 in form of aqueous gel containing the clay and tetra sodium pyrophosphate) under agitation. Slowly add the oil phase in such a way as to form an emulsified organic phase.

### Example 4

### 4.1 Preparation of Premixes

### 4.1.1 Preparation of S-metolachlor Oil Phase (see 1.1.1)

### 4.1.2 Preparation of Mesotrione Millbase

| | %wt |
|---|---|
| Mesotrione | 35.00 |
| Soprophor 4 D384 | 5.70 |
| Acetic acid (80%) | 7.73 |
| Copper hydroxide (100%) | 5.05 |
| Antifoam MSA | 0.10 |
| Kelzan | 0.10 |
| Ammonium nitrate (60%) | 4.30 |
| Water | rest |

Mix together the water, acetic acid and copper hydroxide. Add the mesotrione. The ammonium nitrate, Soprophor 4 D384 (ionic surfactant), Antifoam MSA and Kelzan are added and mixed until uniform. The slurry is ground to a median particle size of less than 2.5 microns.

### 4.2 Preparation of Final Formulation

| | %wt |
|---|---|
| Mesotrione Millbase | 15.95 |
| S-metolachlor oil phase | 62.0 |
| Kelzan | 0.02 |
| Propylene glycol | 4.65 |
| Proxel GXL | 0.19 |
| Silicon oil DB 100 compound | 0.09 |
| Attagel 50 | 1.40 |
| Water | rest |

First charge water, add propylene glycol and mesotrione millbase and mix until uniform. Add the Proxel GXL (preservative), Silicon oil DB 100 compound (antifoam agent) and thickener gels (Kelzan gel and Attagel in form of aqueous gel containing the clay and tetra sodium pyrophosphate) under agitation. Slowly add the oil phase in such a way as to form an emulsified organic phase.

### Example 5

### 5.1 Preparation of Premixes

### 5.1.1 Preparation of S-metolachlor Oil Phase (see 1.1.1)

### 5.1.2 Preparation of Mesotrione Millbase

| | %wt |
|---|---|
| Mesotrione | 25.00 |
| Soprophor FL | 5.70 |
| Acetic Acid (80%) | 7.70 |
| Copper hydroxide (100%) | 3.6 |
| Antifoam MSA | 0.10 |
| Kelzan | 0.10 |
| Water | rest |

Mix together the water, acetic acid and copper hydroxide. Add the mesotrione. The Soprophor FL (surfactant), Antifoam MSA and the Kelzan are added and mixed until uniform. The slurry was ground to a median particle size of less than 2.5 microns.

### 5.2 Preparation of Final Formulation

| | %wt |
|---|---|
| Mesotrione Millbase | 22.3 |
| S-metolachlor oil phase | 62.0 |
| Kelzan | 0.02 |
| Propylene glycol | 4.65 |
| Proxel GXL | 0.19 |
| Silicon oil DB 100 compound | 0.09 |
| Attagel 50 | 1.40 |
| Water | rest |

First charge water, add propylene glycol and Mesotrione millbase and mix until uniform. Add the Proxel GXL (preservative), Silicon oil DB 100 compound (antifoam agent) and thickener gels (Kelzan gel and Attagel in form of aqueous gel containing the clay and tetra sodium pyrophosphate under agitation. Slowly add the oil phase in such a way as to form an emulsified organic phase.

## Claims

1. A chemically and physically stable suspoemulsion formulation, free from polymeric stabilisers having a molecular weight of between 10,000 and 1,000,000 daltons, comprising:
(i) a continuous phase,
(ii) 2-(2'-nitro-4'-methylsulphonyl benzoyl)-1,3-cyclohexanedione or a metal chelate thereof insoluble in the continuous phase,
(iii) a chloroacetamide selected from the group consisting of metolachlor, acetochlor and alachlor, and
(iv) one or more aromatic ethoxylate compounds or derivatives thereof selected from the group consisting of di- or tri-styrylphenol ethoxylates, and phosphates, sulphates and salts thereof;
with the exclusion of formulations comprising all of a tristyrylphenol-ethoxylate having 6-14 mol ethoxylate, in non-ionic form, and a tristyrylphenol-ethoxylate having 14-18 mol ethoxylate in form of its sulphate or phosphate, in anionic or acid form, and a dialkyl-sulfosuccinate salt.

2. A suspoemulsion formulation according to claim 1, wherein the continuous phase is selected from the group consisting of water, glycol or alcohol.

3. A suspoemulsion formulation according to claim 1 or claim 2, wherein the chloroacetamide is S-metholachlor.

4. A suspoemulsion formulation according to any one of claims 1 to 3, wherein the formulation has a pH of 5 or less.

5. A suspoemulsion formulation according to any one of claims 1 to 4, wherein the formulation further comprises one or more additional active ingredients selected from the group consisting of herbicides, fungicides, insecticides, safeners or antidotes.

6. A suspoemulsion formulation according to claim 5, wherein the additional active ingredient is a triazine herbicide.

7. A suspoemulsion formulation according to claim 5, wherein the additional active ingredient is a safener or antidote.

8. A suspoemulsion formulation according to claim 5, wherein the additional active ingredient comprises at least a triazine herbicide and a safener or antidote compound.

9. A suspoemulsion formulation according to any one of claims 1 to 8, wherein the formulation further comprises an electrolyte.

10. A method for controlling the growth of undesirable vegetation comprising applying to the locus of said undesirable vegetation a suspoemulsion formulation according to any one of claims 1 to 9.

## Patentansprüche

1. Chemisch und physikalisch stabile Suspoemulsionsformulierung frei von polymeren Stabilisatoren mit einem Molekulargewicht zwischen 10000 und 1000000 Dalton, umfassend:
(i) eine kontinuierliche Phase,
(ii) 2-(2'-Nitro-4'-methylsulfonylbenzoyl)-1,3-cyclohexandion oder ein Metallchelat davon, welches in der kontinuierlichen Phase unlöslich ist,
(iii) ein Chloracetamid ausgewählt aus der Gruppe bestehend aus Metolachlor, Acetochlor und Alachlor und
(iv) eine oder mehrere aromatische Ethoxylatverbindungen oder Derivate davon ausgewählt aus der Gruppe bestehend aus Di- oder Tristyrylphenolethoxylaten und Phosphaten, Sulfaten und Salzen davon, mit Ausnahme von Formulierungen, die sowohl ein Tristyrylphenolethoxylat mit 6-14 Mol Ethoxylat in nichtionischer Form als auch ein Tristyrylphenolethoxylat mit 14-18 Mol Ethoxylat in Form seines Sulfats oder Phosphats in anionischer oder saurer Form und ein Dialkylsulfosuccinatsalz umfassen.

2. Suspoemulsionsformulierung nach Anspruch 1, wobei die kontinuierliche Phase aus der aus Wasser, Glykol und Alkohol bestehenden Gruppe ausgewählt ist.

3. Suspoemulsionsformulierung nach Anspruch 1 oder 2, wobei es sich bei dem Chloracetamid um *S-*Metholachlor handelt.

4. Suspoemulsionsformulierung nach einem der Ansprüche 1 bis 3, wobei die Formulierung einen pH-Wert von 5 oder weniger aufweist.

5. Suspoemulsionsformulierung nach einem der Ansprüche 1 bis 4, wobei die Formulierung weiterhin ein oder mehrere zusätzliche Wirkstoffe ausgewählt aus der aus Herbiziden, Fungiziden, Insektiziden, Safenern und Antidoten bestehenden Gruppe umfasst.

6. Suspoemulsionsformulierung nach Anspruch 5, wobei es sich bei dem zusätzlichen Wirkstoff um ein Triazinherbizid handelt.

7. Suspoemulsionsformulierung nach Anspruch 5, wobei es sich bei dem zusätzlichen Wirkstoff um einen Safener oder ein Antidot handelt.

8. Suspoemulsionsformulierung nach Anspruch 5, wobei der zusätzliche Wirkstoff mindestens ein Triazinherbizid und einen Safener oder eine Antidotverbindung umfasst.

9. Suspoemulsionsformulierung nach einem der Ansprüche 1 bis 8, wobei die Formulierung weiterhin ein Elektrolyt umfasst.

10. Verfahren zur Bekämpfung des Wachstums von unerwünschter Vegetation, bei dem man auf dem Standort der unerwünschten Vegetation eine Suspoemulsionsformulierung nach einem der Ansprüche 1-9 ausbringt.

## Revendications

1. Formule de suspo-émulsion chimiquement et physiquement stable, exempte de stabilisants polymères de masse moléculaire comprise entre 10 000 et 1 000 000 de daltons, comprenant :
(i) une phase continue,
(ii) de la 2-(2'-nitro-4'-méthylsulfonylbenzoyl)-1,3-cyclohexanedione ou un chélate métallique de celle-ci insoluble dans la phase continue,
(iii) un chloracétamide choisi dans le groupe constitué par métolachlor, acétochlor et alachlor, et
(iv) un ou plusieurs éthoxylates aromatiques ou leurs dérivés choisis dans le groupe constitué par les éthoxylates de di- ou de tri-styrylphénol, ainsi que les phosphates, sulfates et sels de ceux-ci ;
à l'exclusion des formules comprenant la totalité d'un éthoxylate de tristyrylphénol comportant 6 à 14 mol d'éthoxylate, sous forme non ionique, et d'un éthoxylate de tristyrylphénol comportant 14 à 18 mol d'éthoxylate sous forme de son sulfate ou phosphate, sous forme anionique ou acide, et un sel de sulfosuccinate de dialkyle.

2. Formule de suspo-émulsion selon la revendication 1, où la phase continue est choisie dans le groupe constitué par l'eau, le glycol ou l'alcool.

3. Formule de suspo-émulsion selon la revendication 1 ou la revendication 2, où le chloracétamide est le *S-*métholachlor.

4. Formule de suspo-émulsion selon l'une quelconque des revendications 1 à 3, où la formule présente un pH de 5 ou moins.

5. Formule en suspo-émulsion selon l'une quelconque des revendications 1 à 4, où la formule comprend en outre un ou plusieurs principes actifs supplémentaires choisis dans le groupe constitué par les herbicides, les fongicides, les insecticides, les phytoprotecteurs ou les antidotes.

6. Formule de suspo-émulsion selon la revendication 5, où le principe actif supplémentaire est un herbicide de type triazine.

7. Formule de suspo-émulsion selon la revendication 5, où le principe actif supplémentaire est un phytoprotecteur ou un antidote.

8. Formule de suspo-émulsion selon la revendication 5, où le principe actif supplémentaire comprend au moins un herbicide de type triazine et un phytoprotecteur ou un antidote.

9. Formule de suspo-émulsion selon l'une quelconque des revendications 1 à 8, où la formule comprend en outre un électrolyte.

10. Procédé de régulation de la croissance d'une végétation indésirable comprenant l'application au locus de ladite végétation indésirable d'une formule de suspo-émulsion selon l'une quelconque des revendications 1 à 9.
